# EUROPÄISCHE PATENTSCHRIFT

(11) **EP 0 752 334 B1**
(45) Veröffentlichungstag und Bekanntmachung des Hinweises auf die Patenterteilung: **22.03.2000**
(21) Anmeldenummer: 96110570.7
(22) Anmeldetag: 01.07.1996
(51) Int. Cl.: B60J 1/14

(54) **Ausstellbares Karosseriefenster für Kraftfahrzeuge**
Opening window of a vehicle body for motor vehicles
Fenêtre ouvrante de carosserie pour véhicules à moteur

(30) Priorität: 04.07.1995 DE 19524243
(43) Veröffentlichungstag der Anmeldung: 08.01.1997
(73) Patentinhaber: HENNIGES ELASTOMER- UND KUNSTSTOFFTECHNIK GMBH & CO KG, D-31547 Rehburg-Loccum (DE)
(72) Erfinder: Kreye, Bernhard, 31515 Wunstorf (DE)
(74) Vertreter: Jabbusch, Wolfgang, Dr.Jur. Jabbusch, Wehser & Lauerwald Patentanwälte

(56) Entgegenhaltungen:
- EP-A- 0 289 156
- EP-A- 0 646 483
- DE-A- 3 605 017
- DE-C- 971 347
- US-A- 4 363 191

## Beschreibung

Die Erfindung betrifft ein ausstellbares Karosseriefenster für Kraftfahrzeuge mit den Merkmalen des Oberbegriffs des Patentanspruchs 1.

Bei einem bekannten ausstellbaren Karosseriefenster ist das Trägerblech mehrfach abgewinkelt und unter Verwendung eines Klebers direkt an der Fensterscheibe befestigt. Diese unmittelbare Befestigung des Trägerbleches an der Festerscheibe hat den Nachteil geringer Elastizität. Allgemein bei Druckbelastungen des Karosseriefensters, insbesondere aber dadurch, daß die beim Ausstellen des Karosseriefensters entstehenden Verformungen des Trägerbleches sich zum Teil bis in den Bereich des Trägerbleches fortsetzen, der mit der Fensterscheibe klebend verbunden ist, kommt es zu Abrissen des Trägerbleches von der Fensterscheibe.

In der US 4,363,191 A ist ein gattungsgemäßes ausstellbares Karosseriefenster beschrieben. Dabei ist die auszustellende Fensterscheibe bzw. das auszustellende Fenster um eine in Fahrtrichtung vorn liegende, im wesentlichen senkrechte Schwenkachse schwenkbar und weist eine Schwenkverbindung mit dem zugeordneten aufwärtsverlaufenden Rahmen der Karosserie auf. Das Scharnier zwischen Karosserie und Fensterscheibe besteht aus wenigstens einem Trägerblech, das mit wenigstens einer Befestigungsschraube mit dem Rahmen der Karosserie verbunden ist, wobei das Trägerblech in eine elastische Vergußmasse eingebettet ist, die wiederum mit einer Kleberschicht an der Fensterscheibe befestigt ist. Bei der Schwenkbewegung des Karosseriefensters wird insbesondere die Vergußmasse verformt, um die Schwenkbewegung zu gewährleisten. Durch diese Verformung der Vergußmasse wird die Vergußmasse und damit die gesamte Schwenkverbindung stark beansprucht.

Ein weiteres ausstellbares Karosseriefenster für Kraftfahrzeuge ist in der EP 0 646 483 A1 offenbart. Entscheidend für das in dieser Druckschrift offenbarte Karosseriefenster ist, daß das Trägerblech derart mit der Fensterscheibe verklebt ist, daß bei mechanischen Beanspruchungen einer bestimmten Größe ein Nachgeben der Verbindung in einer definierten Weise erfolgt. Das Trägerblech ist dazu überlicherweise auf einer Vergußmasse angeordnet. Genauer gesagt ist das Trägerblech mit einer Kleberschicht und einem darunter angeordneten Primer auf einer keramischen Zwischenschicht befestigt, die ihrerseits auf der Fensterscheibe angeordnet ist.

Der Erfindung liegt die Aufgabe zugrunde, hier Abhilfe zu schaffen und eine Verbindung zwischen Trägerblech und Fenster zu schaffen, die widerstandsfähiger ist.

Diese Aufgabe ist erfindungsgemäß durch ein ausstellbares Karosseriefenster mit den Merkmalen des Patentanspruchs 1 gelöst. Vorteilhafte Weiterbildungen der Erfindung sind in den Unteransprüchen angegeben.

Nach dieser erfindungsgemäßen Lösung wird das Trägerblech in eine elastische Vergußmasse eingebettet und somit an der Fensterscheibe großflächig und elastisch gehalten. Eine solche Verbindung des Trägerbleches mit der Fensterscheibe ist wegen der geschaffenen Elastizität sehr stabil. Die Verformungen des Trägerbleches beim Ausstellen des Karosseriefensters können sich bei dieser Ausführung in den in die Vergußmasse eingebetteten Teil des Trägerbleches fortsetzen, ohne die Verbindung mit der Fensterscheibe zu beanspruchen. Wie sich gezeigt hat, bietet die in sich elastische Vergußmasse noch den Vorteil, daß bei Zugbeanspruchung quer zur Fensterscheibe ein Ansaugeffekt zwischen Fensterscheibe und Vergußmasse auftritt, wodurch die Verbindung zusätzlich stabilisiert ist.

Gemäß einer Weiterbildung der Erfindung ist das Trägerblech in der Vergußmasse im wesentlichen zur Fensterscheibe parallel verlaufend angeordnet. Dadurch ist vorteilhaft ein relativ großer Bereich des Trägerbleches in die Vergußmasse eingebettet und nimmt die gesamte Ausbildung wenig Raum in Anspruch.

Nach einer anderen Weiterbildung ist die Befestigungsschraube nahe dem einen Ende des Trägerbleches durch eine Bohrung im Trägerblech hinduchgeführt. Auch diese Ausbildung ist platzsparend und zeichnet sich durch große Einfachheit aus.

Vorzugsweise wird als Vergußmasse Polyurethan verwendet.

Ein Ausführungsbeispiel der Erfindung ist in der Zeichnung dargestellt. Es zeigen:

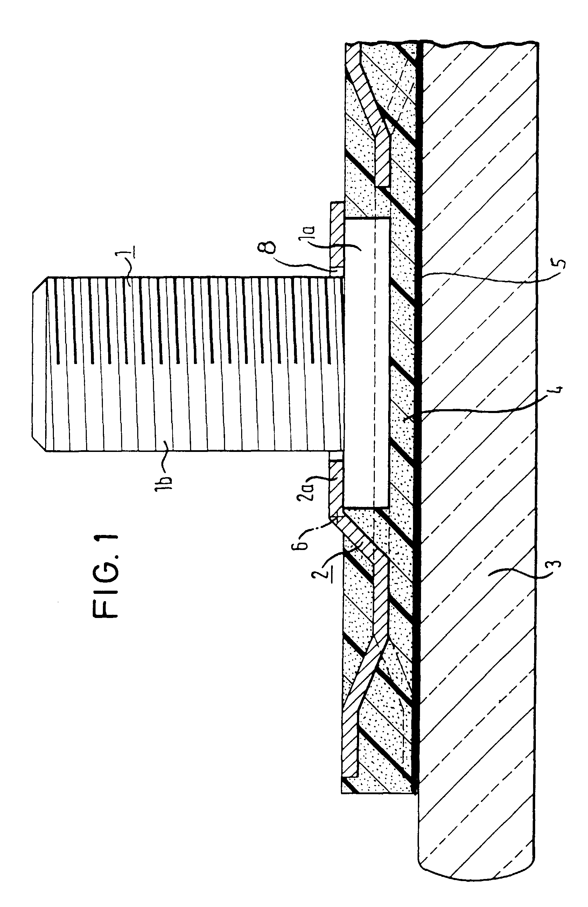

- Fig. 1: im Schnitt eine erfindungsgemäße Halterung der Scheibe eines Karosseriefensters und
- Fig. 2: gleichfalls im Schnitt die Ausführung nach Fig. 1 bei ausgelenkter Scheibe.

Beim Ausführungsbeispiel ist auf die nur teilweise dargestellte Fensterscheibe 3, in Fahrtrichtung vorn liegend, in einem Teilabschnitt eine Vergußmasse 4 aufgebracht. In die Vergußmasse ist ein Trägerblech 2 eingebettet, durch das wenigstens eine Befestigungsschraube 1 hindurchgeführt ist, die mit dem zugeordneten nicht dargestellten aufwärts verlaufenden Holm der Karosserie verbunden wird. Die Vergußmasse 4 ist durch eine Kleberschicht 5 mit der Fensterscheibe 3 verbunden.

Das Trägerblech 2 verläuft im ganzen etwa parallel zur Fensterscheibe 3 und ist mehrfach mit kleinen Winkeln abgebogen. Ein Blechabschnitt 2a des Trägerbleches ragt auf der der Fensterscheibe 3 abgekehrten Seite aus der Vergußmasse 4 heraus und verläuft dort etwa parallel zur Fensterscheibe. Dieser Blechabschnitt 2a hat eine Bohrung 8, und durch diese Bohrung ist eine Befestigungsschraube 1 mit ihrem Schaft 1b hindurchgeführt, derart, daß der Kopf 1a der Befestigungsschraube auf der der Fensterscheibe 3 zugekehrten Seite des Blechabschnittes 2a liegt und somit in die Vergußmasse hineinragt, ohne in diese eingebunden zu sein.

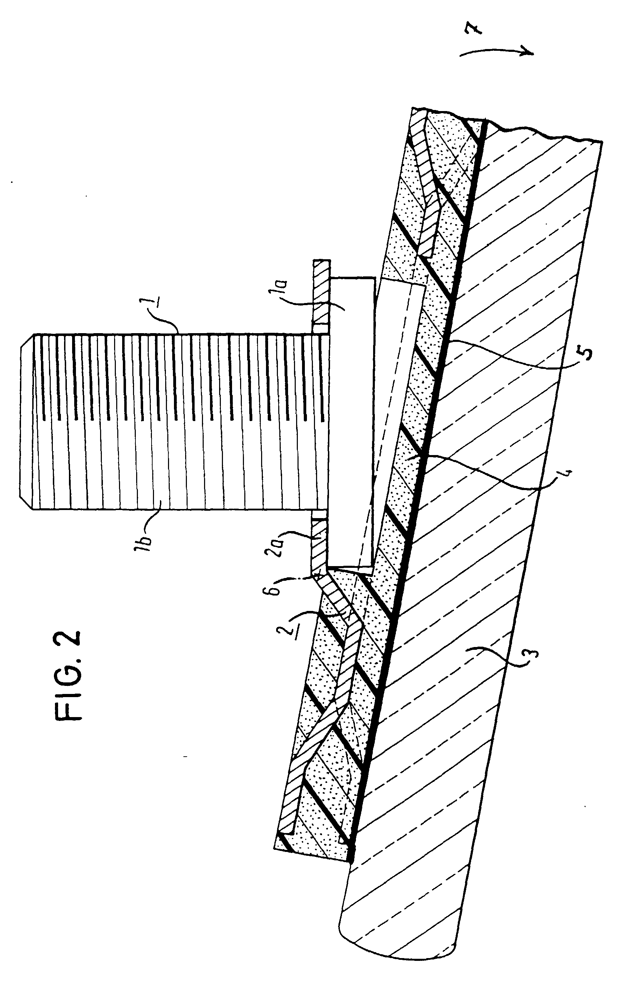

Fig. 2 zeigt das mit der Fensterscheibe 3 angedeutete Fenster in ausgeschwenkter Position, wobei also in Richtung des Pfeiles 7 geschwenkt worden ist. Beim Ausschwenken hat sich das Trägerblech 2 vorzugsweise in seinem Abschnitt 6 verformt und hat sich die Schraube 1 mit ihrem Kopf 1a teilweise aus der Vergußmasse 4 herausgehoben.

## Patentansprüche

1. Ausstellbares Karosseriefenster für Kraftfahrzeuge, bei welchem die auszustellende Fensterscheibe (3) bzw. das auszustellende Fenster um eine in Fahrtrichtung vorn liegende im wesentlichen senkrechte Schwenkachse schwenkbar ist und eine Schwenkverbindung mit einem zugeordneten aufwärts verlaufenden Holm der Karosserie aufweist, wobei das Scharnier zwischen Karosserie und Fensterscheibe aus wenigstens einem Trägerblech (2) besteht, das mit wenigstens einer Befestigungsschraube (1) mit dem Holm der Karosserie verbunden ist, wobei das Trägerblech (2) in eine elastische Vergußmasse (4) eingebettet ist und die Vergußmasse (4) mit einer Kleberschicht (5) an der Fensterscheibe (3) befestigt ist,
dadurch gekennzeichnet,
daß ein Blechabschnitt (2a) des Trägerbleches (2) für die Durchführung der Befestigungsschraube (1) aus der Vergußmasse (4) herausragt, so daß das Trägerblech (2), insbesondere im Übergangsbereich (6) zu dem Blechabschnitt (2a) für die Durchführung der Befestigungsschraube (1), den wesentlichen Teil der Schwenkverbindung bildet.

2. Karosseriefenster nach Anspruch 1, dadurch gekennzeichnet, daß das Trägerblech (2) in der Vergußmasse (4) im wesentlichen zur Fensterscheibe (3) parallel verlaufend angeordnet ist.

3. Karosseriefenster nach einem der vorhergehenden Ansprüche, dadurch gekennzeichnet, daß die Befestigungsschraube (1) nahe dem einen Ende des Trägerblechs (2) durch eine Bohrung (8) im Trägerblech hindurchgeführt ist.

4. Karosseriefenster nach einem der vorhergehenden Ansprüche, dadurch gekennzeichnet, daß die Vergußmasse (4) aus Polyurethan besteht.

## Claims

1. A hinged bodywork window for motor vehicles, in which the window pane (3) or window to be opened out is pivotable about a substantially vertical pivot axis situated at the front in the direction of travel and has a pivoting connexion with an associated pillar of the bodywork extending upwards, wherein the hinge between the bodywork and the window pane comprises at least one sheet-metal support (2) which is connected by at least one fastening screw (1) to the pillar (2) of the bodywork, wherein the sheet-metal support (2) is embedded in a resilient casting compound (4) and the casting compound (4) is fastened to the window pane (3) by an adhesive layer (5), **characterized in that** a portion (2a) of the sheet-metal support (2) for the passage of the fastening screw (1) projects out of the casting compound (4), so that the sheet-metal support (2), in particular in the transition region (6) to the sheet-metal portion (2a) for the passage of the fastening screw (1), forms the essential part of the pivoting connexion.

2. A bodywork window according to Claim 1, **characterized in that** the sheet-metal support (2) is arranged in the casting compound (4) so as essentially to be extending parallel to the window pane (3).

3. A bodywork window according to one of the preceding Claims, **characterized in that** the fastening screw (1) passes through a bore (8) in the sheet-metal support (2) close to one end of the said sheet-metal support.

4. A bodywork window according to one of the preceding Claims, **characterized in that** the casting compound (4) consists of polyurethane.

## Revendications

1. Fenêtre de carrosserie orientable pour véhicules automobiles, dans laquelle la vitre de fenêtre (3) à orienter ou la fenêtre à orienter peut pivoter autour d'un axe de pivotement sensiblement vertical, situé à l'avant dans le sens de marche, et présente une liaison à pivotement avec un montant correspondant de la carrosserie, qui s'étend vers le haut, la charnière entre la carrosserie et la vitre de fenêtre étant constituée au moins d'une tôle de support (2) qui est reliée au montant de la carrosserie, par au moins une vis de fixation (1), la tôle de support (2) étant noyée dans une masse de scellement élastique (4) et la masse de scellement (4) étant fixée à la vitre de fenêtre (3) par une couche de colle (5),
caractérisée
en ce qu'une portion (2a) de la tôle de support (2) dépasse de la masse de scellement (4) pour le passage de la vis de fixation (1), de sorte que la tôle de support (2) constitue la partie essentielle de la liaison à pivotement, notamment dans la zone de transition (6) avec la portion de tôle (2a).

2. Fenêtre de carrosserie selon la revendication 1, caractérisée en ce que la tôle de support (2) est disposée dans la masse de scellement (4) sensiblement parallèlement à la vitre de fenêtre (3).

3. Fenêtre de carrosserie selon l'une des revendications précédentes, caractérisée en ce que la vis de fixation (1) traverse un perçage (8) pratiqué dans la tôle de support, à proximité d'une extrémité de la tôle de support (2).

4. Fenêtre de carrosserie selon l'une des revendications précédentes, caractérisée en ce que la masse de scellement est en polyuréthanne.
